# FASCICULE DE BREVET EUROPEEN

(11) **EP 3 066 057 B1**
(45) Date de publication et mention de la délivrance du brevet: **19.05.2021**
(21) Numéro de dépôt: 14809466.7
(22) Date de dépôt: 05.11.2014
(51) Int. Cl.: C03C 17/36

(54) **SUBSTRAT REVETU D'UN EMPILEMENT A COUCHES FONCTIONNELLES PRESENTANT DES PROPRIETES MECANIQUES AMELIOREES**
SUBSTRAT MIT BESCHICHTUNG AUS GESTAPELTEN FUNKTIONSSCHICHTEN MIT VERBESSERTEN MECHANISCHEN EIGENSCHAFTEN
SUBSTRATE COATED WITH A STACK OF FUNCTIONAL LAYERS HAVING IMPROVED MECHANICAL PROPERTIES

(30) Priorité: 08.11.2013 FR 1360970
(43) Date de publication de la demande: 14.09.2016
(73) Titulaire: SAINT-GOBAIN GLASS FRANCE, 92400 Courbevoie (FR)
(72) Inventeur: RONDEAU, Véronique, F-92600 Asnieres sur Seine (FR); CHARLET, Emilie, F-75011 Paris (FR); SANDRE-CHARDONNAL, Etienne, F-44200 Nantes (FR)
(74) Mandataire: Saint-Gobain Recherche
(86) Numéro de dépôt international: PCT/FR2014/052822
(87) Numéro de publication internationale: WO 2015/067895

(56) Documents cités:
- EP-A1- 1 498 397
- WO-A1-2012/020189
- WO-A2-2006/067102
- US-A1- 2010 136 365

## Description

L'invention concerne un substrat transparent revêtu d'un empilement de couches minces comprenant au moins une couche fonctionnelle pouvant agir sur le rayonnement solaire et/ou le rayonnement infrarouge. L'invention concerne également les vitrages comprenant ces substrats ainsi que l'utilisation de tels substrats pour fabriquer des vitrages d'isolation thermique et/ou de protection solaire.

Ces vitrages sont destinés aussi bien à équiper les bâtiments que les véhicules, en vue notamment de diminuer l'effort de climatisation et/ou de réduire une surchauffe excessive entraînée par l'importance toujours croissante des surfaces vitrées dans les habitacles.

Des vitrages comprenant des substrats transparents revêtus d'un empilement de couches minces comprenant au moins deux couches fonctionnelles métalliques disposées entre trois revêtements en matériau diélectrique présentant les propriétés recherchées sont connus. Ces empilements sont généralement obtenus par une succession de dépôts effectués par une technique utilisant le vide comme la pulvérisation cathodique éventuellement assistée par champ magnétique

La demande de brevet EP1498397A1, décrit des substrats transparents munis d'un empilement de couches minces comportant au moins une couche fonctionnelle disposée entre deux revêtements comportant chacun une couche de matière diélectrique. Les matières diélectriques des couches étant choisies parmi les oxydes, les nitrures et les oxynitrures métalliques.

La demande US 2010/0136365A1 divulgue un substrat transparent muni d'un empilement de couches minces comportant une alternance de n couches fonctionnelles à propriétés de réflexion dans l'infrarouge et/ou dans le rayonnement solaire avec n ≥ 2 et de n+1 revêtements comportant une ou plusieurs couches diélectriques, caractérisé en ce que un des revêtements diélectriques comprend un revêtement barrière comprenant deux couches barrières, une couche comprenant du silicium choisie parmi les oxydes, les nitrures et les oxynitrures et une couche à base de nitrure d'aluminium.

On demande actuellement de plus en plus que ces vitrages de protection solaire présentent aussi des caractéristiques inhérentes aux substrats eux-mêmes, notamment esthétiques (qu'ils puissent être galbés), mécaniques (qu'ils soient plus résistants), ou de sécurité (qu'ils ne blessent pas en cas de bris). Cela nécessite de faire subir aux substrats, de préférence verriers, des traitements thermiques du type bombage, recuit ou trempe. L'empilement de couches doit donc être optimisé pour préserver son intégrité et notamment prévenir son altération lors de ces opérations de transformation.

Une solution développée dans les demandes EP 0 847 965 et WO 02/48065 consiste à utiliser des empilements à deux couches d'argent pouvant subir un traitement thermique du type bombage ou trempe sans évolution optique importante, grâce à l'utilisation de couches barrières du type nitrure de silicium et de couches stabilisante.

Ces vitrages possèdent des propriétés mécaniques insuffisantes. Des rayures apparaissent très souvent sur l'empilement. Mais surtout, une fois ces rayures créées sur un vitrage, leur visibilité augmente de manière considérable lorsque le vitrage est soumis à un traitement thermique de type trempe. Ce phénomène semble en partie lié au démouillage du matériau constituant la couche fonctionnelle au niveau de la rayure. L'aptitude à la rayure des tels vitrages est préjudiciable en termes d'esthétisme et de rendement de production. Cela peut entraîner un taux de rebut anormalement élevé, tout particulièrement dans le cas où ces vitrages sont des vitrages bombés/trempés, de type feuilletés ou non.

L'objectif de l'invention est de développer un substrat revêtu d'un empilement à couches fonctionnelles pouvant subir des opérations de lavage ou des traitements thermiques à haute température du type bombage, trempe ou recuit tout en préservant la qualité de l'empilement et notamment en minimisant son aptitude à être rayé après traitement thermique.

L'invention a pour objet un substrat transparent muni d'un empilement de couches minces tel que défini par la revendication 1.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre.

Le revêtement inférieur 1 comporte une ou plusieurs couches diélectriques et est situé au-dessus du substrat. Puis, la couche fonctionnelle 1 se situe au-dessus du revêtement inférieur 1 et en-dessous du revêtement intermédiaire 2 comportant une ou plusieurs couches diélectriques. Enfin, la dernière couche fonctionnelle n se situe au-dessus du revêtement intermédiaire n et en-dessous du revêtement supérieur n+1 comportant une ou plusieurs couches diélectriques.

L'emploi des termes « inférieur » et « supérieur », pour qualifier par exemple certaines de couches des revêtements 1 à n+1, fait également référence au positionnement défini ci-dessus. Cela signifie qu'une couche supérieure correspond à une couche située au-dessus d'une ou plusieurs autres couches. De même, une couche inférieure correspond à une couche située en-dessous d'une ou plusieurs autres couches.

Selon l'invention, les revêtements peuvent être constitués de plusieurs couches. Les revêtements supérieur, intermédiaires ou inférieur utilisés selon l'invention ne comprennent pas de couches réfléchissant les infra-rouges mais peuvent comporter des couches absorbantes.

Selon l'invention, une couche mince est une couche d'épaisseur inférieure à 1 µm.

La présence d'un revêtement barrière spécifique situé dans un revêtement intermédiaire ou supérieur et à une position particulière de l'empilement permet d'obtenir un substrat présentant une aptitude à être rayé plus faible, mais surtout, une diminution de la révélation des rayures ou des défauts suite à un traitement thermique de type trempe, ce qui se traduit notamment par une non-accentuation de leur visibilité. On améliore donc ainsi les propriétés mécaniques de l'empilement et la résistance aux transformations telles que le lavage, le transport et les traitements thermiques de type trempe.

Lorsque l'empilement est chauffé à température élevée, notamment dans l'intervalle de températures nécessaire aux opérations usuelles de bombage et/ou de trempe de vitrages (environ 550 à 750 °C), les matériaux qui constituent les couches minces et le substrat réagissent différemment à cette sollicitation thermique. La couche fonctionnelle métallique va notamment se dilater fortement, et, de manière générale, davantage que les autres couches de l'empilement, notamment les couches diélectriques, qui lui sont contiguës. Les couches fonctionnelles vont donc se trouver en état de compression à haute température. De même, le substrat de verre se dilate fortement également. Ceci crée des tensions au sein de l'empilement et notamment lorsqu'il existe déjà des rayures, une augmentation desdites rayures.

Le demandeur a découvert que l'utilisation d'un revêtement barrière comprenant l'association d'une couche comprenant du silicium et d'une couche à base de nitrure d'aluminium dans une position particulière de l'empilement permet de diminuer le niveau de contrainte et ainsi d'améliorer les propriétés mécaniques de l'empilement. Il semble que la présence de ce revêtement barrière comprenant deux couches présentant des contraintes en compression et des coefficients d'expansion thermique différents situées dans un revêtement, de préférence intermédiaire (2 à n), permet la relaxation des contraintes de l'ensemble constitué par le substrat de verre revêtu de l'empilement. La présence de ce revêtement barrière permet de soulager les contraintes thermomécaniques à laquelle l'ensemble de l'empilement est soumis sans modifier les autres propriétés de ces substrats.

Le substrat peut être en tout matériau susceptible de résister aux températures élevées du traitement thermique. Les substrats transparents peuvent notamment être des substrats organiques ou minéraux, rigides ou flexibles, notamment en matériau rigide minéral comme le verre ou organique comme un substrat en polymère. Le substrat transparent est de préférence, en verre, notamment silico-sodo-calcique.

De préférence, l'empilement comporte deux couches fonctionnelles alternées avec trois revêtements supérieur, intermédiaire et inférieur (cas où n = 2).

La ou les couches fonctionnelles à propriétés de réflexion dans l'infrarouge et/ou le rayonnement solaire sont des couches métalliques, de préférence à base d'argent ou d'alliage métallique contenant de l'argent. Les différentes couches fonctionnelles de l'empilement peuvent avoir des épaisseurs identiques, ou différentes. Le brevet EP-0 638 528 décrit par exemple un empilement à deux couches d'argent ayant des épaisseurs différentes.

Les revêtements supérieur, intermédiaires et inférieur 1 à n+1 peuvent comprendre une ou plusieurs couches diélectriques présentant des fonctionnalités variées. On peut notamment citer à titre de couches et revêtements constitutifs des revêtements supérieur, intermédiaires ou inférieur, les revêtements barrières, les couches de blocage telles que les couches sacrificielles ou d'accrochage, les couches stabilisantes et les couches absorbantes.

Les revêtements supérieur, intermédiaires ou inférieur ont une épaisseur géométrique d'au moins 20 nm et pouvant aller jusqu'à 120 nm. De préférence, les revêtements inférieur et supérieur ont une épaisseur comprise entre 15 et 60 nm, entre 20 et 50 nm ou encore entre 20 et 40 nm. De préférence, les revêtements intermédiaires ont une épaisseur comprise entre 50 et 100 nm, entre 60 et 90 nm ou encore entre 65 et 85 nm.

Selon l'invention, un revêtement barrière comprend au moins une couche barrière. Une couche barrière est une couche en un matériau apte à faire barrière à la diffusion de l'oxygène et de l'eau à haute température, provenant de l'atmosphère ambiante ou du substrat transparent, vers la couche fonctionnelle. Les matériaux constitutifs de la couche barrière ne doivent donc pas subir de modification chimique ou structurelle à haute température qui entraînerait une modification de leurs propriétés optiques. La ou les couches barrières sont de préférence également choisies en un matériau apte à faire barrière au matériau constitutif de la couche fonctionnelle. Les couches barrières permettent donc à l'empilement de subir sans évolution optique trop significative des traitements thermiques du type recuit, trempe ou bombage.

Les couches barrières sont des couches comprenant du silicium choisis parmi les oxydes tels que SiO₂, les nitrures Si₃N₄ et les oxynitures SiOₓN_{y}. Les couches barrières sont aussi à base de nitrures d'aluminium AIN.

Lorsque l'on utilise des couches nitrurées par exemple d'aluminium ou de silicium, on cherche à obtenir une stœchiométrie stable afin d'obtenir les propriétés optiques requises notamment de transparence. Toutefois, une telle stœchiométrie stable n'est pas forcément atteinte en fonction des conditions de dépôt. Les couches de nitrure peuvent être stoechiométrique, sous-stoechiométrique ou sur-stoechiométrique en azote. On peut ajuster la stœchiométrie, notamment en faisant varier le pourcentage d'azote dans la chambre de pulvérisation quand on dépose la couche par pulvérisation cathodique réactive à partir d'une cible métallique. Chaque revêtement supérieur, intermédiaire ou inférieur comprend un revêtement barrière comprenant au moins une couche barrière comprenant du silicium choisie parmi les oxydes tels que SiO₂, les nitrures Si₃N₄ et les oxynitures SiOₓN_{y}.

Les nitrures de silicium et/ou d'aluminium sont connus pour leur grande inertie chimique, même à haute température. Les couches à base de ces matériaux jouent leur rôle de diélectrique à fonction optique, à fonction de protection des couches d'argent et éventuellement lorsqu'elles ont placées au contact d'une couche absorbante, à fonction de couches écran.

Chaque revêtement inférieur, intermédiaire ou supérieur peut comprendre au moins un revêtement barrière comprenant au moins une couche barrière. Les revêtements barrières se situent de préférence au-dessus de chaque couche fonctionnelle et au-dessus du substrat transparent. De manière préférentielle, l'empilement peut comprendre au moins un revêtement barrière au-dessus et en-dessous de chaque couche fonctionnelle.

L'épaisseur géométrique d'un revêtement barrière est d'au moins 10 nm, notamment d'au moins 15 nm, et peut aller jusqu'à 120 nm. Lorsque le revêtement barrière est constitué d'une seule couche barrière, ces épaisseurs correspondent à l'épaisseur de l'unique couche barrière.

Chacune des couches barrières d'un revêtement barrière a une épaisseur d'au moins 5 nm.

L'épaisseur d'un revêtement barrière peut dépendre de sa place dans l'empilement. Par exemple :
- lorsque le revêtement est un revêtement inférieur, l'épaisseur du revêtement barrière peut être comprise entre 15 et 60 nm, entre 20 et 50 nm ou encore entre 25 et 35 nm,
- lorsque le revêtement est un revêtement intermédiaire (2 à n), l'épaisseur du revêtement barrière peut être comprise entre 50 et 100 nm, entre 60 et 90 nm ou encore entre 65 et 85 nm.
- lorsque le revêtement est un revêtement supérieur, l'épaisseur du revêtement barrière peut être comprise entre 10 et 40 nm, entre 10 et 30 nm ou encore entre 10 et 20 nm.

Un revêtement barrière comportant au moins deux couches, une couche comprenant du silicium et une couche à base de nitrure d'aluminium, satisfait également les critères d'épaisseur donnés ci-dessus. Par exemple, lorsque le revêtement barrière est constitué de deux couches, la couche à base de nitrure d'aluminium et la couche comprenant du silicium ont chacune une épaisseur d'au moins 5 nm, notamment d'au moins 7 nm, notamment comprise entre 7 et 30 nm ou encore entre 10 et 20 nm.

Avantageusement, l'épaisseur totale de la ou les couches de nitrure d'aluminium présentes dans un revêtement intermédiaire ou supérieur peut varier de 10 nm à la moitié de l'épaisseur du revêtement intermédiaire ou supérieur dans lequel elle se situe. L'épaisseur de toutes les couches de nitrure d'aluminium comprises dans un revêtement intermédiaire ou supérieur représente 20 à 80%, de préférence 30 à 60% de l'épaisseur totale dudit revêtement intermédiaire ou supérieur.

La stœchiométrie de la couche de nitrure d'aluminium peut également varier. En effet, cette couche de nitrure d'aluminium peut comprendre un ou plusieurs métaux ou métalloïdes autres que l'aluminium. La présence et les proportions de ce ou ces autres métaux ou métalloïdes sont choisies de sorte que les propriétés de l'empilement ne soient pas modifiées. Le rapport de l'aluminium sur tous les autres métaux ou métalloïdes en pourcentage atomique dans les couches de nitrures d'aluminium est supérieur à 1. De manière avantageuse, ce rapport en pourcentage atomique entre l'aluminium et tous autres métaux ou métalloïdes des couches de nitrure d'aluminium est, par ordre de préférence croissant, supérieur à 1,5, supérieur à 3, supérieur à 4, supérieur à 9, supérieur à 15, supérieur à 20, supérieur à 50, supérieur à 100.

A titre d'exemple, la couche de nitrure d'aluminium peut notamment comprendre du silicium avec un rapport de l'aluminium sur le silicium en pourcentage atomique dans la couche supérieur à 1.

Selon un mode de réalisation, la couche de nitrure d'aluminium ne contient pas d'autres métaux ou metalloïdes que l'aluminium.

Selon des modes de réalisation avantageux de l'invention, l'empilement peut satisfaire une ou plusieurs des caractéristiques suivantes :
- la ou les revêtements barrières du revêtement inférieur 1 sont constitués de nitrure de silicium, cela signifie que ces revêtements barrières et donc le revêtement inférieur 1 ne comprend pas de couche de nitrure d'aluminium,
- la ou les revêtements barrières du revêtement supérieur n+1 sont constituées de nitrure de silicium, cela signifie que ces revêtements barrières et donc le revêtement supérieur n+1 ne comprend pas de couche de nitrure d'aluminium,
- le revêtement barrière comprenant au moins deux couches barrières, une couche comprenant du silicium et une couche à base de nitrure d'aluminium, comprend trois couches barrières, deux couches comprenant du silicium au-dessus et en dessous d'une couche à base de nitrure d'aluminium,
- le revêtement barrière comprenant au moins deux couches barrières, une couche comprenant du silicium et une couche à base de nitrure d'aluminium, comprend quatre couches barrières, deux couches comprenant du silicium et deux couches à base de nitrure d'aluminium,
- la couche à base de nitrure d'aluminium se situe entre une couche fonctionnelle et la couche comprenant du silicium du revêtement barrière comprenant au moins deux couches,
- la couche à base de nitrure d'aluminium se trouve entre deux couches diélectriques dont l'une au moins est à base d'un nitrure de silicium et l'autre d'oxyde de zinc.

De préférence, le revêtement barrière comprenant au moins deux couches, une couche comprenant du silicium et une couche à base de nitrure d'aluminium, se situe dans le revêtement intermédiaire n, c'est à dire dans l'avant-dernier revêtement. Dans ce revêtement intermédiaire n, la couche à base de nitrure d'aluminium se situe au-dessus de la couche fonctionnelle n-1 et en dessous de la couche comprenant du silicium du revêtement barrière comprenant au moins deux couches.

L'empilement de l'invention peut comprendre également au moins une couche de blocage. De préférence, les couches de blocages sont directement en contact d'une couche fonctionnelle. Une couche de blocage située au-dessus d'une couche fonctionnelle est appelée surcouche de blocage. Une couche de blocage située en-dessous d'une couche fonctionnelle est appelée sous-couche de blocage.

Les couches de blocage peuvent comprendre une fine couche métallique ou d'oxyde métallique sous-stœchiométrique éventuellement nitrurée. A titre de couche de blocage convenant selon l'invention, on peut citer une couche d'un métal ou d'un oxyde ou sous oxyde métallique à base de titane, niobium, d'alliage nickel-chrome. Les couches métalliques sont éventuellement partiellement oxydées.

De préférence, les couches de blocage ont une épaisseur inférieure à 5 nm, de préférence inférieure à 3 nm et mieux comprise entre 0,5 à 2 nm.

Dans le mode de réalisation préférentiel de l'invention, au moins une, de préférence chaque couche fonctionnelle est surmontée d'une couche de blocage. La couche sacrificielle a de préférence une épaisseur inférieure à 2 nm.

L'empilement selon l'invention ou au moins un revêtement comprend au moins une couche stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La couche stabilisante est de préférence une couche à base d'oxyde choisi parmi l'oxyde de zinc, l'oxyde d'étain, l'oxyde de zirconium ou un mélange d'au moins deux d'entre eux.

La ou les couches stabilisantes sont de préférence des couches d'oxyde de zinc. En effet, il est avantageux d'avoir une couche à base d'oxyde de zinc en-dessous d'une couche fonctionnelle, car elle facilite l'adhésion et la cristallisation de la couche fonctionnelle à base d'argent et augmente sa qualité et sa stabilité à haute température. Il est également avantageux d'avoir une couche à base d'oxyde de zinc au-dessus d'une couche fonctionnelle, pour en augmenter l'adhésion et s'opposer de manière optimale à la diffusion du côté de l'empilement opposé au substrat.

La ou les couches stabilisantes peuvent donc se trouver au-dessus et/ou en dessous d'au moins une couche fonctionnelle ou de chaque couche fonctionnelle, soit directement à son contact ou soit séparées par une couche de blocage. De préférence, chaque couche fonctionnelle est au-dessus d'un revêtement dont la couche supérieure est une couche stabilisante, de préférence à base d'oxyde de zinc et/ou en-dessous d'un revêtement dont la couche inférieure est une couche stabilisante.

Avantageusement, chaque couche barrière est séparée d'une couche fonctionnelle par au moins une couche stabilisante.

Cette couche stabilisante peut avoir une épaisseur d'au moins 5 nm, notamment une épaisseur comprise entre 5 et 25 nm et mieux de 8 à 15 nm.

Dans le cas où l'empilement utilise ainsi plusieurs couches fonctionnelles, il est avantageux que la dernière couche fonctionnelle, celle la plus éloignée du substrat revêtu de l'empilement, soit munie à la fois d'un revêtement barrière et d'une couche stabilisante. Cette dernière couche fonctionnelle est la plus « exposée » de par sa position dans l'empilement, en ce sens qu'elle était la plus susceptible d'être oxydée par l'atmosphère ambiante. De plus, cette dernière couche fonctionnelle (n) est celle dont une partie de son matériau constitutif peut migrer le plus facilement jusqu'à la surface extérieure de la dernière couche de l'empilement.

On peut bien sûr prévoir que l'ensemble des couches fonctionnelles soit ainsi muni d'un revêtement barrière, d'une couche stabilisante et éventuellement d'une couche sacrificielle et/ou d'accrochage.

L'empilement selon l'invention ou au moins un revêtement inférieur, supérieur ou intermédiaire peut comprendre en outre au moins une couche absorbante. Une telle couche permet de régler dans une certaine gamme le niveau de transmission lumineuse du vitrage, sans pour autant avoir à reconfigurer complètement l'empilement de couches minces. La ou les couches absorbantes dans le visible peut être insérées entre deux couches de matériau diélectrique et séparées de la ou des couches d'argent par lesdites couches diélectriques.

La ou les couches absorbantes peuvent comprendre un métal, un alliage métallique, un oxyde métallique ou nitrure métallique. Le métal peut être choisi parmi le titane Ti, le niobium Nb ou le zirconium Zr et les alliages métalliques parmi les alliages de nickel et de chrome NiCr. Les oxydes métalliques peuvent être choisis parmi l'oxyde de chrome, l'oxyde de fer ou un oxyde sous-stoechiométrique de titane ou de zinc. Les nitrures métalliques peuvent être choisis parmi le nitrure de titane, le nitrure de niobium, le nitrure de zirconium, le nitrure de chrome ou un nitrure de nickel et de chrome.

Selon un mode de réalisation selon lequel l'empilement comporte deux couches fonctionnelles à base d'argent entre trois revêtements inférieur, intermédiaire et supérieur, la ou les couches absorbantes sont insérées dans le revêtement intermédiaire disposé entre les deux couches fonctionnelles et/ou dans le revêtement supérieur disposé au-dessus de la seconde couche fonctionnelle.

Selon un mode de réalisation préféré de l'invention, la couche absorbante se trouve entre deux couches diélectriques dont l'une au moins appartient à un revêtement barrière. Au moins une des deux couches entre lesquelles est insérée la couche absorbante peut donc être une couche barrière.

Dans une variante, la ou les couches absorbantes peuvent être insérées dans un revêtement barrière entre deux couches barrières d'un revêtement inférieur, intermédiaire ou supérieur, de préférence intermédiaire.

L'épaisseur de chacune des couches absorbantes dans le visible est, par ordre de préférence croissant, inférieure ou égale à 7 nm, inférieure ou égale à 5 nm, inférieure ou égale à 3 nm, inférieure ou égale à 2 nm, comprise entre 0,5 et 2 nm.

Les couches absorbantes ont une absorption lumineuse intrinsèque d'au moins 3%, notamment comprise entre 4 et 15% ou entre 6 et 12%.

Il est intéressant de noter que certains matériaux convenant pour les couches sacrificielles conviennent également comme couches absorbantes. Selon un mode de réalisation, l'une des couches sacrificielles joue également le rôle de couche absorbante. La couche à la fois absorbante et sacrificielle peut être essentiellement métallique, notamment en un matériau choisi parmi l'un au moins des métaux suivants : Ni, Cr, Nb, Sn, Ti, un alliage du type NiCr ou acier. Dans ce cas, son épaisseur est de préférence de 2 à 5 nm.

La couche absorbante peut se trouver dans le revêtement intermédiaire et/ou supérieur comprenant le revêtement barrière comprenant une couche comprenant du silicium et une couche à base de nitrure d'aluminium. La couche absorbante est de préférence directement au contact de deux couches barrières. La couche absorbante est de préférence directement au contact de deux couches comprenant du silicium.

Le revêtement barrière comprenant notamment une couche de nitrure d'aluminium et la couche absorbante peuvent être insérés dans le revêtement n dit « intermédiaire », c'est-à-dire dans un revêtement disposé entre deux couches fonctionnelles.

Enfin, l'empilement de l'invention comprend de préférence une surcouche protectrice. Cette surcouche protectrice est donc la couche supérieure du revêtement n+1. De préférence, le revêtement n+1 comporte comme couche supérieure une couche à base de SnZnO ou de TiO₂. Son épaisseur est de préférence choisie entre 0,5 et 20 nm, notamment entre 1 et 5 nm.

Selon un mode de réalisation avantageux, le substrat transparent comprend un empilement défini en partant du substrat transparent comprenant :
- au moins un revêtement barrière,
- au moins une couche stabilisante,
- au moins une couche fonctionnelle,
- éventuellement une couche de blocage,
- au moins une couche stabilisante,
- au moins un revêtement barrière,
- au moins une couche stabilisante,
- au moins une couche fonctionnelle,
- éventuellement une couche de blocage,
- au moins une couche stabilisante,
- au moins un revêtement barrière.

Selon un autre mode de réalisation, le substrat transparent comprend un empilement défini en partant du substrat transparent comprenant :
- au moins un revêtement barrière,
- au moins une couche stabilisante,
- au moins une couche fonctionnelle,
- éventuellement une couche de blocage,
- au moins une couche stabilisante,
- au moins un revêtement barrière dans lequel est insérée au moins une couche absorbante,
- au moins une couche stabilisante,
- au moins une couche fonctionnelle,
- éventuellement une couche de blocage,
- au moins une couche stabilisante,
- au moins un revêtement barrière.

Ces empilements définis en partant du substrat transparent peuvent notamment être choisis parmi :
- Si₃N₄/ZnO/Ag/ZnO/AlN/Si₃N₄/ZnO/Ag/ZnO/Si₃N₄,
- Si₃N₄/ZnO/Ag/ZnO/Si₃N₄/AlN/ZnO/Ag/ZnO/Si₃N₄,
- Si₃N₄/ZnO/Ag/NiCr/ZnO/AlN/Si₃N₄/ZnO/Ag/NiCr/ZnO/Si₃N₄,
- Si₃N₄/ZnO/Ag/NiCr/ZnO/Si₃N₄/AlN/ZnO/Ag/NiCr/ZnO/Si₃N₄,
- Si₃N₄/ZnO/Ag/ZnO/AlN/Si₃N₄/TiN ou NbN ou NiCrN/Si₃N₄/ZnO/Ag/ZnO/Si₃N₄,
- Si₃N₄/ZnO/Ag/NiCr/ZnO/AlN/Si₃N₄/TiN ou NbN ou NiCrN/Si₃N₄/ZnO/Ag/NiCr /ZnO/Si₃N₄,
- Si₃N₄/ZnO/Ag/ZnO/Si₃N₄/TiN ou NbN ou NiCrN/Si₃N₄/AlN/ZnO/Ag/ZnO/Si₃N₄,
- Si₃N₄/ZnO/Ag/NiCr/ZnO/Si₃N₄/TiN ou NbN ou NiCrN/Si₃N₄/AlN/ZnO/ Ag/NiCr/ ZnO/ Si₃N₄,
- Si₃N₄/ZnO/Ag/ZnO/Si₃N₄/TiN ou NbN ou NiCrN/Si₃N₄/ZnO/Ag/ZnO/AlN/Si₃N₄,
- Si₃N₄/ZnO/Ag/NiCr/ZnO/ Si₃N₄/TiN ou NbN ou NiCrN/Si₃N₄/ZnO/Ag/NiCr/ZnO/ AlN/Si₃N₄,
- Si₃N₄/ZnO/Ag/ZnO/AlN/Si₃N₄/AlN/Si₃N₄/ZnO/Ag/ZnO/Si₃N₄,
- Si₃N₄/ZnO/Ag/ZnO/Si₃N₄/AlN/ Si₃N₄/AlN/ZnO/Ag/ZnO/Si₃N₄,
- Si₃N₄/ZnO/Ag/NiCr/ZnO/ AlN/Si₃N₄/AlN/Si₃N₄/ZnO/Ag/NiCr/ZnO/Si₃N₄,
- Si₃N₄/ZnO/Ag/NiCr/ZnO/Si₃N₄/AlN/ Si₃N₄/AlN/ZnO/Ag/NiCr/ZnO/Si₃N₄,
- Si₃N₄/ZnO/Ag/ZnO/AlN/Si₃N₄/AlN/Si₃N₄/TiN ou NbN ou NiCrN/Si₃N₄/ZnO/Ag /ZnO /Si₃N₄,
- Si₃N₄/ZnO/Ag/NiCr/ZnO/AlN/Si₃N₄/AlN/Si₃N₄/TiN ou NbN ou NiCrN/Si₃N₄/ ZnO/ Ag/ NiCr /ZnO/Si₃N₄,
- Si₃N₄/ZnO/Ag/ZnO/Si₃N₄/TiN ou NbN ou NiCrN/Si₃N₄/AlN/Si₃N₄/AlN/ZnO/Ag/ ZnO /Si₃N₄,
- Si₃N₄/ZnO/Ag/NiCr/ZnO/Si₃N₄/TiN ou NbN ou NiCrN/Si₃N₄/AlN/ Si₃N₄/ AlN/ZnO/ Ag /NiCr/ ZnO/Si₃N₄,
- Si₃N₄/ZnO/Ag/ZnO/Si₃N₄/TiN ou NbN ou NiCrN/Si₃N₄/ZnO/Ag/ZnO/ AlN/Si₃N₄/ AlN /Si₃N₄,
- Si₃N₄/ZnO/Ag/NiCr/ZnO/ Si₃N₄/TiN ou NbN ou NiCrN/Si₃N₄/ZnO/Ag/NiCr/ AlN/Si₃N₄/AlN/Si₃N₄/ZnO,
- Si₃N₄/ZnO/Ag/ZnO/Si₃N₄/AlN/Si₃N₄/ZnO/Ag/ZnO/Si₃N₄,
- Si₃N₄/ZnO/Ag/ZnO/Si₃N₄/AlN/Si₃N₄/ZnO/Ag/ZnO/Si₃N₄,
- Si₃N₄/ZnO/Ag/NiCr/ZnO/ Si₃N₄/AlN/Si₃N₄/ZnO/Ag/NiCr/ZnO/Si₃N₄,
- Si₃N₄/ZnO/Ag/NiCr/ZnO/Si₃N₄/AlN/Si₃N₄/ZnO/Ag/NiCr/ZnO/Si₃N₄,
- Si₃N₄/ZnO/Ag/ZnO/Si₃N₄/AlN/Si₃N₄/TiN ou NbN ou NiCrN/Si₃N₄/ZnO/Ag/ ZnO/Si₃N₄,
- Si₃N₄/ZnO/Ag/NiCr/ZnO/Si₃N₄/AlN/Si₃N₄/TiN ou NbN ou NiCrN/Si₃N₄/ZnO/Ag/ NiCr/ZnO /Si₃N₄,
- Si₃N₄/ZnO/Ag/ZnO/Si₃N₄/TiN ou NbN ou NiCrN/Si₃N₄/AlN/ Si₃N₄/ZnO/Ag/ ZnO /Si₃N₄,
- Si₃N₄/ZnO/Ag/NiCr/ZnO/Si₃N₄/TiN ou NbN ou NiCrN/Si₃N₄/AlN/ Si₃N4/ZnO/Ag/ NiCr/ ZnO /Si₃N₄,
- Si₃N₄/ZnO/Ag/ZnO/Si₃N₄/TiN ou NbN ou NiCrN/Si₃N₄/ZnO/Ag/ZnO/Si₃N₄/ AlN/ Si₃N₄,
- Si₃N₄/ZnO/Ag/NiCr/ZnO/ Si₃N₄/TiN ou NbN ou NiCrN/Si₃N₄/ZnO/Ag/NiCr/ZnO/ Si₃N₄/AlN/ Si₃N₄

Le vitrage de l'invention comprend le substrat porteur de l'empilement. Ce vitrage peut comprendre en outre d'autres substrats. Ces substrats peut être clairs, ou colorés notamment au moins un des substrats peut être en verre coloré dans la masse. Le choix du type de coloration va dépendre du niveau de transmission lumineuse et/ou de l'aspect colorimétrique recherchés pour le vitrage une fois sa fabrication achevée.

Les substrats peuvent être des verres commercialisés sous le nom de PARSOL® par SAINT-GOBAIN, notamment ceux de teinte vert de gris. Il peut aussi s'agir des verres dont la composition et les propriétés sont notamment décrites dans les brevets EP-0 616 883, EP-0 644 164, EP-0 722 427 et WO-96/00394.

L'invention concerne tous les vitrages munis de ces substrats tels que les vitrages feuilletés, les vitrages feuilletés dits asymétriques, les vitrages multiples du type double-vitrage.

Les vitrages présentant une structure feuilletée, comprennent au moins deux substrats rigides du type verre solidarisé par au moins une feuille de polymère thermoplastique, afin de présenter une structure de type verre/empilement de couches minces/feuille(s)/verre. Le polymère peut notamment être à base de polyvinulbutyral PVB, éthylène vinylacétate EVA, polyéthylène téréphtalate PET, polychlorure de vinyle PVC. L'empilement est déposé sur un des substrats rigides ou sur une feuille de polymère que l'on vient assembler avec les deux substrats rigides par des feuilles thermoplastiques.

Le vitrage peut aussi présenter une structure de vitrage feuilleté dit asymétrique, comprenant un substrat rigide de type verre et au moins une feuille de polymère de type polyuréthane à propriétés d'absorbeur d'énergie, éventuellement associée à une autre couche de polymères. Pour plus de détails sur ce type de vitrage, on pourra se reporter notamment aux brevets EP-0 132 198, EP-0 131 523, EP-0 389 354. Le vitrage peut alors présenter une structure de type verre/empilement de couches minces/feuille(s) de polymère.

Les vitrages selon l'invention sont aptes à subir un traitement thermique sans dommage pour l'empilement de couches minces. Ils sont donc éventuellement bombés et/ou trempés. Dans le cas où ils sont bombés, notamment en vue de constituer des vitrages pour véhicules, l'empilement de couches minces se trouve de préférence sur une face au moins partiellement non plane. Dans une structure feuilletée, il est de préférence en contact avec la feuille de polymère.

Le vitrage peut être aussi bombé et/ou trempé en étant constitué d'un seul substrat, celui muni de l'empilement. On parle alors de vitrage « monolithique ». Le vitrage peut aussi être un vitrage multiple, notamment un double-vitrage, au moins le substrat porteur de l'empilement étant bombé et/ou trempé. Il est préférable dans une configuration de vitrage multiple que l'empilement soit disposé de manière à être tourné du côté de la lame de gaz intercalaire.

Dans le cas de vitrage de type double vitrage, l'empilement est de préférence en face 2 ou en face 3 du vitrage (en numérotant les faces des substrats, de façon conventionnelle, de la face la plus extérieure à la face intérieure du vitrage une fois monté dans un local).

L'invention concerne les vitrages qui présentent :
- des transmissions lumineuses TL de 5 à 80%, notamment de 40 à 60%, et/ou
- une réflexion lumineuse extérieure R, de 10 à 30%, et/ou
- des valeurs de a* et de b* en réflexion lumineuse extérieure inférieures ou égales à 1, de préférence négatives (même après avoir subi des traitements thermiques du type trempe), plus particulièrement dans le cas d'empilements à deux couches d'argent.

Enfin, le vitrage comportant un substrat muni de l'empilement selon l'invention peut également être muni d'au moins un autre revêtement de fonctionnalité différente, notamment un revêtement anti-salissures, un revêtement hydrophobe, un revêtement hydrophile, un revêtement antireflets. Ils peuvent comporter, par exemple, un revêtement anti-salissures à base de TiO₂ photocatalytique, un revêtement hydrophobe à base de polymère fluoré, un revêtement hydrophile à base de SiO₂ ou SiOC, un ou plusieurs revêtements antireflets. Ces revêtements sont de préférence disposés sur une au moins des faces extérieures des vitrages (les faces tournées vers l'extérieur, par opposition aux faces tournées vers la feuille thermoplastique intérieure dans le cas d'un feuilleté ou aux faces tournées vers la lame d'air, de gaz ou de vide dans le cas d'un vitrage isolant).

L'invention concerne également le procédé de fabrication du substrat, qui consiste à déposer l'empilement de couches minces sur son substrat, de préférence en verre. Le dépôt peut être réalisé par une technique sous vide du type pulvérisation cathodique éventuellement assistée par champ magnétique (sans exclure que la première ou les premières couches puissent être déposée(s) par une autre technique, par exemple par une technique de décomposition thermique de type pyrolyse). Le procédé peut comprendre en outre un traitement thermique du type bombage/trempe ou recuit sur le substrat revêtu.

Les détails et caractéristiques avantageuses de l'invention ressortent des exemples non limitatifs suivants.

### Exemples

### I. Description des vitrages testés

Les empilements sont déposés sur des substrats en verre clair silicosodocalcique de 4 mm d'épaisseur.

Dans tous les exemples de l'invention :
- les couches fonctionnelles sont des couches d'argent (Ag),
- les couches de blocage sont en alliage de nickel et de chrome (NiCr),
- les couches stabilisantes sont en oxyde de zinc (ZnO),
- les couches absorbantes sont en nitrure de nickel et de chrome (NiCrN).

Les empilements de l'invention comprennent au moins un revêtement barrière comprenant au moins deux couches barrières, une couche à base de nitrure de silicium (Si₃N₄) et une couche à base de nitrure d'aluminium (AlN) à une position particulière. De préférence, les deux couches barrières comprenant au moins une couche à base de nitrure de silicium (Si₃N₄) et une couche à base de nitrure d'aluminium (AlN) du revêtement barrière sont en contact direct.

Les autres revêtements barrières des empilements selon l'invention, selon l'exemple de référence peuvent être uniquement constitués de nitrure de silicium (Si₃N₄).

Dans ces exemples, on a fait varier la nature du revêtement barrière et sa position.

Les dépôts successifs des couches de l'empilement s'effectuent par pulvérisation cathodique assistée par champ magnétique.

L'installation de dépôt comprend au moins une chambre de pulvérisation munie de cathodes équipées de cibles en matériaux appropriés sous lesquels le substrat passe successivement. Les densités de puissance, les vitesses de défilement du substrat, la pression et le choix de l'atmosphère sont ajustés de manière connue pour obtenir les épaisseurs de couches voulues.

Les vitrages testés comprennent les empilements décrits dans le tableau ci-dessous.

| Positionnement | | Ex. Réf. | Inv. 1 | Inv. 2 | Inv. 3 | Inv. 4 | Inv. 5 |
|---|---|---|---|---|---|---|---|
| Substrat | Verre | nm | nm | nm | nm | nm | nm |
| Revêtement inférieur 1 | Si₃N₄ | 30 | 30 | 30 | 30 | 30 | 30 |
| | ZnO | 6 | 6 | 6 | 6 | 6 | 6 |
| Couche fonctionnelle 1 | Ag | 7 | 7 | 7 | 7 | 7 | 7 |
| | NiCr | 0,8 | 0,8 | 0,8 | 0,8 | 0,8 | 0,8 |
| Revêtement intermédiaire 2 | ZnO | 6 | 6 | 6 | 6 | 6 | 6 |
| | AlN | - | - | 20 | - | 20 | - |
| | Si₃N₄ | 34 | 34 | 14 | 34 | 48 | 48 |
| | Si₇₀Al₃₀N | - | - | - | - | - | - |
| | NiCrN | 0,9 | 0,9 | 0,9 | 0,9 | - | - |
| | Si₃N₄ | 34 | 34 | 34 | 14 | - | - |
| | AlN | - | - | - | 20 | - | 20 |
| | ZnO | 6 | 6 | 6 | 6 | 6 | 6 |
| Couche fonctionnelle 2 | Ag | 18 | 18 | 18 | 18 | 18 | 18 |
| | NiCr | 1 | 1 | 1 | 1 | 1 | 1 |
| Revêtement supérieur 3 | ZnO | 6 | 6 | 6 | 6 | 6 | 6 |
| | AlN | - | 8 | - | - | - | - |
| | Si₃N₄ | 16 | 8 | 16 | 16 | 16 | 16 |
| | SnZnO | 3 | 3 | 3 | 3 | 3 | 3 |

Le caractère «-» signifie que la couche n'existe pas. L'exemple de référence ne comprend pas de couche à base de nitrure d'aluminium.

L'exemple de l'invention 1 comprend un revêtement barrière comprenant une couche à base de nitrure d'aluminium dans le revêtement supérieur 3 situé au-dessus de la dernière couche fonctionnelle. Dans ce mode de réalisation non préférentiel, la couche à base de nitrure d'aluminium n'est pas comprise entre deux couches fonctionnelles.

Les exemples de l'invention 2, 3 et 5 comprennent un revêtement barrière comprenant une couche à base de nitrure d'aluminium dans le revêtement intermédiaire 2 situé entre les deux couches fonctionnelles.

Les vitrages une fois muni de l'empilement de couches peuvent subir un traitement thermique afin de simuler une trempe dans les conditions usuelles dans le domaine. Les vitrages sont alors soumis à un traitement thermique pendant environ 8 minutes à une température d'environ 650 °C suivi d'un refroidissement à l'air ambiant (environ 20 °C).

### II. Test Erichsen à la Brosse (EBT)

Les différents vitrages comprenant les substrats décrits ci-dessus ont été soumis au test Erichsen à la Brosse (EBT), pendant 100 ou 300 cycles, avant et après trempe. Ce test consiste à frotter l'empilement à l'aide d'une brosse à poil en matériau polymère, l'empilement étant recouvert d'eau. On considère qu'un vitrage satisfait au test si aucune marque n'est visible à l'œil nu.

Le test avant trempe donne une bonne indication sur l'aptitude du vitrage à être rayé lors d'une opération de lavage. Le test après trempe donne une bonne indication sur la propagation des rayures après traitement thermique.

Les indicateurs d'appréciation suivants ont été utilisés :
«+++» : aucune rayure,
«++» : 1 ou 2 rayures fines et non continues,
«+» : quelques rayures fines et non continues,
«0» : rayures non continues,
«-» : nombreuses rayures fines,
«--» : encore plus nombreuses rayures fines,
«---» : très rayé.

Le tableau ci-dessous récapitule les vitrages, les conditions d'évaluation et les indicateurs d'appréciation.

| Trempe | Avant | | Après | |
|---|---|---|---|---|
| cycles | 100 | 300 | 100 | 300 |
| Référence | ++ | + | -- | --- |
| Inv. 1 | ++ | + | 0 | - |
| Inv. 2 | +++ | +++ | +++ | ++ |
| Inv. 3 | +++ | +++ | +++ | +++ |

Les empilements de l'invention permettent de suffisamment relâcher les contraintes en compression et ainsi supprimer les inconvénients liés à l'aptitude à la rayure de tels empilements et à la propagation desdites rayures suite à un traitement thermique et ce plus particulièrement lorsque la couche barrière comprenant du nitrure d'aluminium se situe dans le revêtement intermédiaire 2.

### III. Test Erichsen à la Pointe

Les différents vitrages comprenant les substrats décrits ci-dessus ont été soumis au test Erichsen à la Pointe (EST) après avoir subi une trempe dans les conditions définies ci-dessus. Ce test consiste à reporter la valeur de la force nécessaire, en Newton, pour réaliser une rayure dans l'empilement lors de la réalisation du test (pointe de Van Laar, bille d'acier). Le test a été réalisé à 0,5 N. La largeur des rayures (I.) a été mesurée en µm.

| Vitrage | largeur de la rayure avant trempe | Largeur de la rayure éclatée après trempe | % de rayure corrodée |
|---|---|---|---|
| Référence | 15 | 40 | 50% |
| Inv. 1 | 17 | 60 | 55% |
| Inv. 2 | 12 | 15 | 10% |
| Inv. 3 | 15 | 30 | 20% |

Une rayure corrodée et éclatée (propagation de la corrosion dans les zones adjacentes de la rayure) apparait très visible en transmission et présente un aspect jaune brillant. Les empilements comprenant le revêtement barrière particulier de l'invention situé dans le revêtement intermédiaire 2 montre une rayure moins visible après trempe. En effet, le revêtement barrière évite la corrosion de la rayure et la propagation de cette corrosion dans les zones adjacentes à la rayure (appelé éclatement). La visibilité de la rayure est la même avant et après trempe. Cette tendance est encore plus marquée lorsque la couche à base de nitrure d'aluminium se situe au-dessus d'une couche stabilisante et en-dessous d'une couche de Si₃N₄.

Ces exemples montrent clairement que le revêtement barrière comprenant notamment une couche à base de nitrure d'aluminium doit être inséré d'une façon particulière dans des empilements afin de limiter l'aptitude à la rayure desdits empilements ou, en cas de rayure, la visibilité des desdites rayures.

## Revendications

1. Substrat transparent muni d'un empilement de couches minces comportant une alternance de n couches fonctionnelles à propriétés de réflexion dans l'infrarouge et/ou dans le rayonnement solaire avec n ≥ 2 et de n+1 revêtements comportant une ou plusieurs couches diélectriques, de manière à ce que chaque couche fonctionnelle est disposée entre deux revêtements, les revêtements et les couches fonctionnelles sont numérotés en fonction de leur position par rapport au substrat transparent, le revêtement inférieur 1 est placé au-dessus du substrat transparent et en-dessous de la couche fonctionnelle 1, les revêtements intermédiaires 2 à n sont placés entre deux couches fonctionnelles et le revêtement supérieur n+1 est placé au-dessus de la couche fonctionnelle n, **caractérisé en ce que** au moins un des revêtements supérieur ou intermédiaires 2 à n+1, de préférence intermédiaire 2 à n, comprend :
- au moins un revêtement barrière comprenant au moins deux couches barrières, une couche comprenant du silicium choisie parmi les oxydes tels que SiO₂, les nitrures Si₃N₄ et les oxynitures SiOₓN_{y} et une couche à base de nitrure d'aluminium
- chaque revêtement supérieur, intermédiaire ou inférieur comprend un revêtement barrière comprenant au moins une couche barrière comprenant du silicium choisie parmi les oxydes tels que SiO₂, les nitrures Si₃N₄ et les oxynitures SiOₓN_{y}.

2. Substrat transparent selon la revendication 1 **caractérisé en ce que** l'empilement comporte deux couches fonctionnelles alternées avec trois revêtements, inférieur, intermédiaire et supérieur.

3. Substrat transparent selon la revendication 1 ou 2 **caractérisé en ce que** le revêtement barrière comprenant au moins deux couches comprend trois couches, deux couches comprenant du silicium situées au-dessus et en-dessous d'une couche à base de nitrure d'aluminium.

4. Substrat transparent selon la revendication 1 ou 2 **caractérisé en ce que** la couche à base de nitrure d'aluminium se situe entre une couche fonctionnelle et la couche comprenant du silicium.

5. Substrat transparent selon l'une quelconque des revendications précédentes **caractérisé en ce que** le revêtement barrière comprenant au moins deux couches, une couche comprenant du silicium et une couche à base de nitrure d'aluminium se situe dans le revêtement intermédiaire n.

6. Substrat transparent selon la revendication 5 **caractérisé en ce que** dans le revêtement intermédiaire n, la couche à base de nitrure d'aluminium se situe au-dessus de la couche fonctionnelle n-1 et en-dessous d'une couche comprenant du silicium.

7. Substrat transparent selon l'une quelconque des revendications précédentes **caractérisé en ce qu'**au moins une, de préférence chaque couche fonctionnelle est surmontée d'une couche de blocage.

8. Substrat transparent selon l'une quelconque des revendications précédentes **caractérisé en ce qu'**au moins un revêtement inférieur, intermédiaire ou supérieur comprend au moins une couche stabilisante.

9. Substrat transparent selon la revendication 8 **caractérisé en ce que** chaque couche fonctionnelle est au-dessus d'un revêtement inférieur ou intermédiaire dont la couche supérieure est une couche stabilisante, de préférence à base d'oxyde de zinc et/ou en-dessous d'un revêtement intermédiaire ou supérieur dont la couche inférieure est une couche stabilisante.

10. Substrat transparent selon l'une quelconque des revendications précédentes **caractérisé en ce qu'**au moins un revêtement inférieur, intermédiaire ou supérieur comprend au moins une couche absorbante.

11. Substrat transparent selon l'une quelconque des revendications précédentes **caractérisé en ce que** le revêtement supérieur n+1 comporte comme couche supérieure une couche à base de SnZnO ou de TiO₂, de préférence d'épaisseur inférieure à 5 nm.

12. Substrat transparent selon l'une quelconque des revendications précédentes **caractérisé en ce que** la couche de nitrure d'aluminium comprend un ou plusieurs métaux ou métalloïdes autres que l'aluminium avec un rapport de l'aluminium sur tous les autres métaux ou métalloïdes en pourcentage atomique dans la couches de nitrures d'aluminium supérieur à 1, de préférence supérieur à 9.

13. Substrat transparent selon l'une quelconque des revendications précédentes **caractérisé en ce que** l'épaisseur de toutes les couches de nitrure d'aluminium comprises dans un revêtement intermédiaire ou supérieur représente 20 à 80%, de préférence 30 à 60% de l'épaisseur totale dudit revêtement intermédiaire ou supérieur.

14. Substrat transparent selon l'une quelconque des revendications précédentes **caractérisé en ce qu'**il comprend un empilement défini en partant du substrat transparent comprenant :
- au moins un revêtement barrière,
- au moins une couche stabilisante,
- au moins une couche fonctionnelle,
- éventuellement une couche sacrificielle,
- au moins une couche stabilisante,
- au moins un revêtement barrière dans lequel est éventuellement intercalé au moins une couche absorbante,
- au moins une couche stabilisante,
- au moins une couche fonctionnelle,
- éventuellement une couche sacrificielle,
- au moins une couche stabilisante,
- au moins un revêtement barrière.

15. Vitrage comprenant un substrat transparent selon l'une quelconque des revendications précédentes, caractérisé en qu'il est sous forme de vitrage feuilleté, de vitrage asymétrique ou d'un vitrage multiple du type double vitrage.

## Patentansprüche

1. Transparentes Substrat mit gestapelten dünnen Schichten, umfassend eine wechselnde Folge von n Funktionsschichten mit Infrarot- und/oder Sonnenstrahlung reflektierenden Eigenschaften, wobei n ≥ 2, und n+1 Beschichtungen mit einer oder mehreren dielektrischen Schichten umfassen, so dass jede Funktionsschicht zwischen zwei Beschichtungen angeordnet ist, wobei die Beschichtungen und die Funktionsschichten entsprechend ihrer Position relativ zum transparenten Substrat nummeriert sind, die untere Beschichtung 1 über dem transparenten Substrat und unter der Funktionsschicht 1 platziert ist, die Zwischenbeschichtungen 2 bis n zwischen zwei Funktionsschichten platziert sind und die obere Beschichtung n+1 über der Funktionsschicht n platziert ist, **dadurch gekennzeichnet, dass** mindestens eine von der oberen Beschichtung oder den Zwischenbeschichtungen 2 bis n+1, vorzugsweise Zwischenbeschichtung 2 bis n, Folgendes umfasst:
- mindestens eine Barrierebeschichtung, umfassend mindestens zwei Barriereschichten, eine Schicht umfassend Silizium, ausgewählt aus Oxiden wie SiO₂, Si₃N₄-Nitriden und SiOₓN_{y}-Oxynitriden, und eine Schicht auf Basis von Aluminiumnitrid
- wobei jede obere Beschichtung, Zwischenbeschichtung oder untere Beschichtung eine Barrierebeschichtung umfasst, umfassend mindestens eine Barriereschicht umfassend Silizium, ausgewählt aus Oxiden wie SiO₂, Si₃N₄-Nitriden und SiOₓN_{y}-Oxynitriden.

2. Transparentes Substrat nach Anspruch 1, **dadurch gekennzeichnet, dass** der Stapel zwei Funktionsschichten im Wechsel mit drei Beschichtungen umfasst, untere Beschichtung, Zwischenbeschichtung oder obere Beschichtung.

3. Transparentes Substrat nach Anspruch 1 oder 2, **dadurch gekennzeichnet, dass** die mindestens zwei Schichten umfassende Barrierebeschichtung drei Schichten umfasst, wobei zwei Silizium umfassende Schichten über und unter einer Schicht auf Basis von Aluminiumnitrid angeordnet sind.

4. Transparentes Substrat nach Anspruch 1 oder 2, **dadurch gekennzeichnet, dass** sich die Schicht auf Basis von Aluminiumnitrid zwischen einer Funktionsschicht und der Silizium enthaltenden Schicht befindet.

5. Transparentes Substrat nach einem der vorstehenden Ansprüche, **dadurch gekennzeichnet, dass** sich die Barrierebeschichtung, die mindestens zwei Schichten umfasst, eine Silizium umfassende Schicht und eine Schicht auf Basis von Aluminiumnitrid in der Zwischenbeschichtung n befindet.

6. Transparentes Substrat nach Anspruch 5, **dadurch gekennzeichnet, dass** sich in der Zwischenbeschichtung n die Schicht auf Basis von Aluminiumnitrid über der Funktionsschicht n-1 und unter einer Silizium umfassenden Schicht befindet.

7. Transparentes Substrat nach einem der vorstehenden Ansprüche, **dadurch gekennzeichnet, dass** mindestens eine, vorzugsweise jede, Funktionsschicht von einer Blockierschicht überlagert ist.

8. Transparentes Substrat nach einem der vorstehenden Ansprüche, **dadurch gekennzeichnet, dass** mindestens eine untere Beschichtung, Zwischenbeschichtung oder obere Beschichtung mindestens eine Stabilisierungsschicht umfasst.

9. Transparentes Substrat nach Anspruch 8, **dadurch gekennzeichnet, dass** sich jede Funktionsschicht über einer unteren Beschichtung oder Zwischenbeschichtung, deren obere Schicht eine Stabilisierungsschicht ist, vorzugsweise auf Basis von Zinkoxid, und/oder unter einer Zwischenbeschichtung oder oberen Beschichtung, deren untere Schicht eine Stabilisierungsschicht ist, befindet.

10. Transparentes Substrat nach einem der vorstehenden Ansprüche, **dadurch gekennzeichnet, dass** mindestens eine untere Beschichtung, Zwischenbeschichtung oder obere Beschichtung mindestens eine Absorptionsschicht umfasst.

11. Transparentes Substrat nach einem der vorstehenden Ansprüche, **dadurch gekennzeichnet, dass** die obere Beschichtung n+1 als obere Schicht eine Schicht auf Basis von SnZnO oder TiO₂, vorzugsweise mit einer Dicke von weniger als 5 nm, aufweist.

12. Transparentes Substrat nach einem der vorstehenden Ansprüche, **dadurch gekennzeichnet, dass** die Aluminiumnitridschicht ein oder mehrere Metalle oder Metalloide neben Aluminium mit einem Verhältnis von Aluminium zu allen anderen Metallen oder Metalloiden in Atomprozent in der Aluminiumnitridschicht von mehr als 1, vorzugsweise mehr als 9, umfasst.

13. Transparentes Substrat nach einem der vorstehenden Ansprüche, **dadurch gekennzeichnet, dass** die Dicke aller Aluminiumnitridschichten, die in einer Zwischenbeschichtung oder oberen Beschichtung enthalten sind, 20 bis 80 %, vorzugsweise 30 bis 60 %, der Gesamtdicke der Zwischenbeschichtung oder oberen Beschichtung beträgt.

14. Transparentes Substrat nach einem der vorstehenden Ansprüche, **dadurch gekennzeichnet, dass** es einen Stapel umfasst, der ausgehend vom transparenten Substrat definiert ist, umfassend:
- mindestens eine Barrierebeschichtung,
- mindestens eine Stabilisierungsschicht,
- mindestens eine Funktionsschicht,
- eventuell eine Opferschicht,
- mindestens eine Stabilisierungsschicht,
- mindestens eine Barrierebeschichtung, in die eventuell mindestens eine Absorptionsschicht eingefügt ist,
- mindestens eine Stabilisierungsschicht,
- mindestens eine Funktionsschicht,
- eventuell eine Opferschicht,
- mindestens eine Stabilisierungsschicht,
- mindestens eine Barrierebeschichtung.

15. Verglasung mit einem transparenten Substrat nach einem der vorstehenden Ansprüche, **dadurch gekennzeichnet, dass** sie in Form einer Verbundverglasung, einer asymmetrischen Verglasung oder einer Mehrfachverglasung vom Typ Doppelverglasung vorliegt.

## Claims

1. A transparent substrate provided with a stack of thin layers comprising an alternation of n functional layers having reflection properties in the infrared region and/or in solar radiation with n ≥ 2 and of n+1 coatings comprising one or more dielectric layers, so that each functional layer is positioned between two coatings, the coatings and the functional layers are numbered according to their position with respect to the transparent substrate, the lower coating 1 is placed above the transparent substrate and below the functional layer 1, the intermediate coatings 2 to n are placed between two functional layers and the upper coating n+1 is placed above the functional layer n, **characterized in that** at least one of the upper or intermediate coatings 2 to n+1, preferably intermediate coatings 2 to n, comprises :
- at least one barrier coating comprising at least two barrier layers, one layer comprising silicon chosen amongst oxides such as SiO₂, nitrides Si₃N₄ and oxynitrides SiOₓN_{y} and one layer based on aluminum nitride;
- each upper, intermediate or lower coating comprises a barrier coating comprising at least one barrier layer comprising silicon chosen amongst oxides such as SiO₂, nitrides Si₃N₄ and oxynitrides SiOₓN_{y}.

2. The transparent substrate as claimed in claim 1, **characterized in that** the stack comprises two functional layers alternating with three lower, intermediate and upper coatings.

3. The transparent substrate as claimed in claim 1 or 2, **characterized in that** the barrier coating comprising at least two layers comprises three layers, two layers comprising silicon located above and below a layer based on aluminum nitride.

4. The transparent substrate as claimed in claim 1 or 2, **characterized in that** the layer based on aluminum nitride is located between a functional layer and the layer comprising silicon.

5. The transparent substrate as claimed in any one of the preceding claims, **characterized in that** the barrier coating comprising at least two layers, one layer comprising silicon and one layer based on aluminum nitride, is located in the intermediate coating n.

6. The transparent substrate as claimed in claim 5, **characterized in that**, in the intermediate coating n, the layer based on aluminum nitride is located above the functional layer n-1 and below a layer comprising silicon.

7. The transparent substrate as claimed in any one of the preceding claims, **characterized in that** at least one, preferably each, functional layer is surmounted by a blocking layer.

8. The transparent substrate as claimed in any one of the preceding claims, **characterized in that** at least one lower, intermediate or upper coating comprises at least one stabilizing layer.

9. The transparent substrate as claimed in claim 8, **characterized in that** each functional layer is above a lower or intermediate coating, the upper layer of which is a stabilizing layer, preferably based on zinc oxide, and/or below an intermediate or upper coating, the lower layer of which is a stabilizing layer.

10. The transparent substrate as claimed in any one of the preceding claims, **characterized in that** at least one lower, intermediate or upper coating comprises at least one absorbing layer.

11. The transparent substrate as claimed in any one of the preceding claims, **characterized in that** the upper coating n+1 comprises, as upper layer, a layer based on SnZnO or TiO₂, preferably with a thickness of less than 5 nm.

12. The transparent substrate as claimed in any one of the preceding claims, **characterized in that** the layer of aluminum nitride comprises one or more metals or semimetals other than aluminum with a ratio of the aluminum to all the other metals or semimetals, as atomic percentage, in the layers of aluminum nitrides of greater than 1, preferably of greater than 9.

13. The transparent substrate as claimed in any one of the preceding claims, **characterized in that** the thickness of all the layers of aluminum nitride included in an intermediate or upper coating represents from 20 to 80%, preferably from 30 to 60%, of the total thickness of said intermediate or upper coating.

14. The transparent substrate as claimed in any one of the preceding claims, **characterized in that** comprises a stack, defined starting from the transparent substrate, comprising:
- at least one barrier coating,
- at least one stabilizing layer,
- at least one functional layer,
- optionally a sacrificial layer,
- at least one stabilizing layer,
- at least one barrier coating into which at least one absorbing layer is optionally intercalated,
- at least one stabilizing layer,
- at least one functional layer,
- optionally a sacrificial layer,
- at least one stabilizing layer,
- at least one barrier coating.

15. A glazing comprising a transparent substrate as claimed in any one of the preceding claims, **characterized in that** it is in the form of a laminated glazing, of an asymmetric glazing or of a multiple glazing of the double glazing type.
